# EUROPÄISCHE PATENTANMELDUNG

(11) **EP 1 932 576 A1**
(43) Veröffentlichungstag der Anmeldung: **18.06.2008**
(21) Anmeldenummer: 07122989.2
(22) Anmeldetag: 12.12.2007
(51) Int. Cl.: B01D 39/20, B01D 53/04

(54) **Filterelement mit Aktivkohlebeschichtung**

(30) Priorität: 12.12.2006 DE 202006018863 U
(71) Anmelder: MANN+HUMMEL GmbH, 71638 Ludwigsburg (DE)
(72) Erfinder: Tumbrink, Manfred, 64732, Bad König (DE); Gohle, Angelika, 67365, Schwegenheim (DE)

(57) **Zusammenfassung**

Um ein Filterelement (10) zu schaffen, das bei einem einfachen Aufbau eine hohe Adsorptionsleistung gewährleistet, ist vorgesehen, eine Filterlage (14) mit einem dreischichtigen Aufbau aus oberer Deckschicht (11), Aktivkohleschicht (13) und unterer Deckschicht (12) zu versehen, die zu einem Faltenbalg gefaltet und zumindest mit einer weiteren dreischichtigen, ebenfalls zu einem Faltenbalg gefalteten, Filterlage (15) zusammenwirkend angeordnet ist, wobei die zumindest weitere Filterlage (15) an der einen Filterlage (14) formschlüssig über die Faltenfluchtung der Faltenbälge angeordnet ist.

## Beschreibung

### Technisches Gebiet

Die Erfindung betrifft ein Filterelement mit einer Aktivkohleschicht, die mit einer oberen Deckschicht und mit einer unteren Deckschicht zu einer Filterlage verbunden ist, gemäß dem Oberbegriff des Anspruchs 1.

### Stand der Technik

In der EP 0 960 965 A2 sind verschiedene Filtermedien offenbart, die im schichtweisen Aufbau zu einem Filterelement zusammengesetzt werden können. Hierzu zählt beispielsweise auch ein Filtermedium, das eine Aktivkohleschicht mit einer an deren Oberseite angrenzenden Vliesschicht und mit einer an deren Unterseite angrenzenden Schicht aus Feinfaser-Spinnvliesstoff (Meltblown) aufweist.

### Offenbarung der Erfindung

Aufgabe der Erfindung ist es, ein Filterelement zu schaffen, das bei einem einfachen Aufbau eine hohe Adsorptionsleistung gewährleistet. Diese Aufgabe wird durch ein Filterelement mit den Merkmalen des Anspruchs 1 gelöst.

Aufgrund der formschlüssig über die Faltenfluchtung der Filterbälge ineinander gelegten, und aus mehreren Schichten Filtermedium aufgebauten, Filterlagen, ist ein kompaktes und mit geringem Aufwand herzustellendes Filterelement gegeben, das zudem einen ausgezeichneten Abscheidegrad aufweist. Die Abmessungen des Filterelements sind demnach nahezu gleich bleibend, wohingegen die Filterleistung erheblich verbessert werden kann. Die Filtrationsleistung kann über die Anzahl der eingesetzten Filterlagen festgesetzt werden, so dass eine Variabilität hinsichtlich des Abscheidegrads vorhanden ist und sich darüber letztlich der Druckunterschied zwischen der so genannten Rohseite und der so genannten Reinseite des Filterelements bestimmen lässt.

Eine erste Ausführungsform sieht vor, dass bei dem Filterelement nur die oberste Deckschicht in dem Verbund aus Filterlagen mit einem Filtermedium, insbesondere mit Filterpapier, versehen ist, wodurch eine günstige Partikelfiltration, beispielsweise Staubfiltration, und nachrangig eine Adsorption von Schadstoffen mittels Aktivkohle oder anderer Adsorbermedien aus der zu reinigenden Luft, erfolgt.

In einer vorteilhaften Ausgestaltung ist vorgesehen, dass bei dem Filterelement die oberen Deckschichten in dem Verbund aus Filterlagen aus Filtermedium sind, so dass auf effiziente Weise eine mehrstufige Partikelfiltration und eine mehrstufige Schadstoffadsorption gegeben ist.

Insbesondere ist es vorteilhaft, dass bei dem Filterelement alle Deckschichten jeder einzelnen Filterlage aus Filtermedium sind, wodurch der Abscheidegrad für die Partikelfiltration auf einfache Weise erhöht werden kann.

In einer vorteilhaften Ausgestaltung ist vorgesehen, dass bei dem Filterelement sämtliche Deckschichten jeder einzelnen Filterlage aus Vlies sind, wodurch insbesondere den Anforderungen an einen Einsatz in Reinräumen Rechnung getragen wird.

Mit Vorteil ist bei dem Filterelement die jeweilige Aktivkohleschicht mit ihren Deckschichten verklebt, so dass bei einer Umformung des Elements die Aktivkohlepartikel lagetreu, zum Beispiel auch im Bereich einer Biegung, verharren.

Insbesondere ist es vorteilhaft, dass bei dem Filterelement der Klebstoffanteil < 2%, insbesondere < 1%, des Gesamtvolumens der Aktivkohleschicht beträgt, so dass bei einer ausreichenden Haftung der Aktivkohlepartikel an den Deckschichten ein möglichst geringer Druckverlust zwischen der Rohseite und der Reinseite erzielt wird.

In einer vorteilhaften Ausgestaltung ist vorgesehen, dass bei dem Filterelement die Filterlagen zick-zack-förmig oder mäander-förmig gestaltet sind, wodurch verschiedene, je nach Einsatzzweck ausgelegte, Umformungen der Filterlagen zum Tragen kommen.

Mit Vorteil ist das Filterelement derart ausgestaltet, dass die zumindest beiden Filterlagen wenigstens an zwei gegenüberliegenden Stirnseiten, insbesondere mittels eines Seitenvlies, miteinander verbunden sind; hierdurch werden zum einen ursprünglich offene Seiten der Filterlagen abdichtend verschlossen und zum anderen behalten die Filterlagen - je nach Steifigkeit des Vlies - ihre Flexibilität bei, was beim Einbau des Filterelements in ein gebogenes Filtergehäuse unerlässlich ist.

In einer vorteilhaften Ausgestaltung ist vorgesehen, dass bei eingebautem Zustand des Filterelements in einem Filtergehäuse zumindest eines der Seitenvliese eine abdichtende Funktion, beispielsweise an dem Deckel des Filtergehäuses, übernimmt, so dass dem Seitenvlies eine Doppelfunktion zukommt.

### Kurze Beschreibung der Zeichnungen

Die Erfindung wird nachfolgend mit Bezug auf die Zeichnung näher erläutert; hierbei zeigen:

Figur 1 - 5 verschiedene Ausführungsformen eines erfindungsgemäßen Filterelements, jeweils in einer Schnittdarstellung,

Figur 6 ein Seitenvlies, das passend zu dem in Figur 5 dargestellten Filterelement dimensioniert ist. Ausführungsform(en) der Erfindung

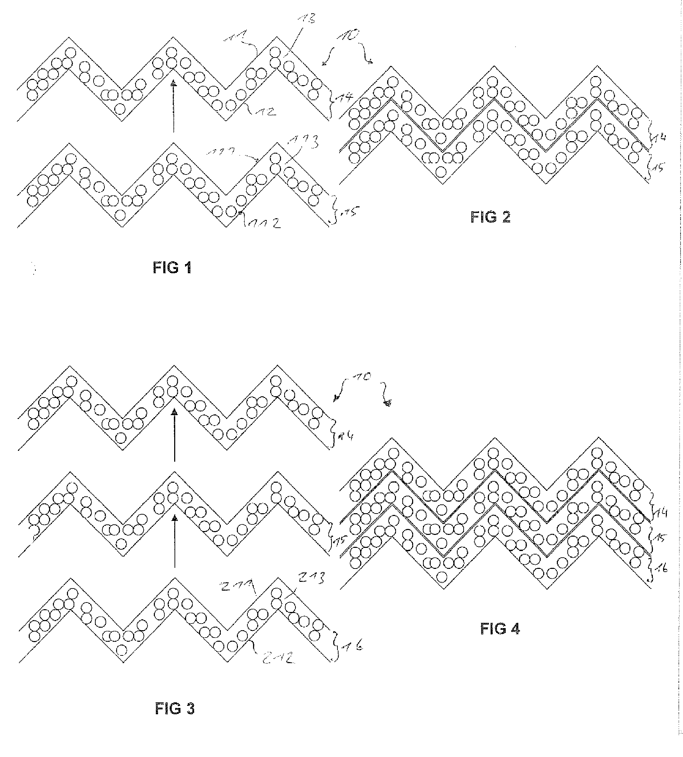

In Figur 1 ist eine Ausführungsform des Filterelements 10 gezeigt, bei dem eine erste zick-zack-förmige Deckschicht 11 und eine zweite zick-zack-förmige Deckschicht 12 eine Schicht aus Aktivkohlepartikeln 13 umgibt. Die in einer Schicht angeordneten Aktivkohlepartikel 13 sind hierbei mit den beiden Schichten 11, 12 verklebt. Der Klebstoffanteil ist dabei so gering gewählt, dass die Aktivkohlepartikel 13 an den Decklagen 11, 12 ausreichend stark haften, jedoch lediglich ein möglichst kleiner Druckabfall zwischen Roh- und Reinseite bedingt ist. Der Klebstoffanteil bezogen auf das Gesamtvolumen der Aktivkohleschicht 13 beträgt dabei weniger als 1 - 2 %.

Der Schichtenverbund 11 - 13 ergibt eine erste Filterlage 14. Mittels einer baugleichen weiteren Filterlage 15, die an die Form der ersten Filterlage 14 angeglichen ist, entsteht gemäß Figur 2 ein Filterlagenverbund 14, 15, der zudem beliebig mit zusätzlichen Filterlagen 16 gemäß Figur 3 und 4 erweiterbar ist.

Durch eine positionsgleiche Plissierung bzw. Faltung jeder einzelnen Filterlage 14 - 16 sind Filterbälge gegeben, die aufeinander gelegt eine formschlüssige Gesamtstruktur des Filterelements 10 entstehen lassen.

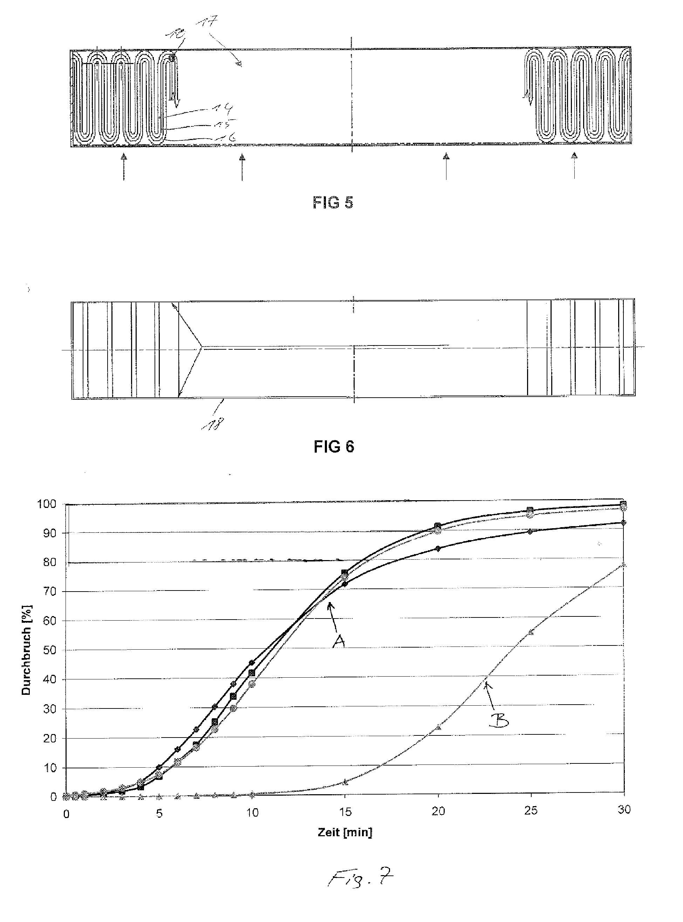

Im Gegensatz zu einer einstückigen, hoch aufbauenden Filterlage kommen separate, aufgeschichtete Filterlagen 14 - 16 zum Einsatz, die nicht flächig miteinander, sondern an wenigstens zwei gegenüberliegenden Stirnseiten mittels eines Seitenvlies oder einer Klebstoffleiste verbunden bzw. verklebt sind. Gemäß Figur 5 sind die aufgeschichteten Filterlagen 14 - 16 mäander-förmig plissiert und können an ihren offenen Profilseiten 17 mit einem in Höhe und Länge angepassten Seitenvlies 18 gemäß Figur 6 verschlossen werden. Ausführbar ist auch ein auf allen vier Seiten des Filterelements 10 umlaufendes Seitenvlies. Die Luftanströmung des Filterelements 10 erfolgt gemäß Figur 5 von der dargestellten Unterseite.

Der mehrlagige, nur im Kantenbereich verbundene, Aufbau der Filtermedien 14 - 16 erlaubt es, die einzelnen Filterlagen 14 - 16 mit Innen-Biegeradien in Mäander-Form oder Zick-Zack-Form vorzusehen, wodurch die jeweils gewünschte Faltenform erzielt werden kann. Im Gegensatz dazu würde ein flächig verbundene und hoch aufbauende Einheit aus mehreren Lagen Filtermedium ebenso wie ein einstückiges, hoch aufbauendes Filtermedium lediglich sehr kleine Innen-Biegeradien zulassen. Die gewünschte Faltenform könnte in Folge dessen nicht mehr oder nur unzureichend hergestellt werden.

Die Erfindung kann wie folgt zusammengefasst werden: Um ein Filterelement 10 zu schaffen, das bei einem einfachen Aufbau eine hohe Adsorptionsleistung gewährleistet, ist vorgesehen, eine Filterlage 14 mit einem dreischichtigen Aufbau aus oberer Deckschicht 11, Aktivkohleschicht 13 und unterer Deckschicht 12 zu versehen, die zu einem Faltenbalg gefaltet und zumindest mit einer weiteren dreischichtigen, ebenfalls zu einem Faltenbalg gefalteten, Filterlage 15 zusammenwirkend angeordnet ist, wobei die zumindest weitere Filterlage 15 an der einen Filterlage 14 formschlüssig über die Faltenfluchtung der Faltenbälge angeordnet ist.

Bevorzugte Filteraufbauschichten werden in den nachfolgenden Beispielen gezeigt.

Beispiel 1: Die Trägerschicht besteht aus einem Polyestermaterial. Auf diesem Polyestermaterial ist die Aktivkohleschicht aufgetragen und die Aktivekohleschicht schließt ab mit einem Meltblownmaterial, insbesondere Polykarbonat für die Partikelfiltration. Der komplette Aufbau besitzt ein Flächengewicht von 400 - 600 g/m². Die Dicke beträgt 1 - 2 mm, bevorzugt 1 - 6 mm. Die Luftdurchlässigkeit beträgt bei einem Differenzdruck von 200 Pa ≥ 1000 l/(m²s)

Beispiel 2: Die Trägerschicht besteht aus einem Polyester non-woven-Vlies mit 10 - 30 g/m². Auf dieser Trägerschicht ist eine Aktivkohleschicht ohne Imprägnierung angeordnet. Die Deckschicht besteht aus einem Polyestervlies mit einem Polykarbonatmeltblown für die Partikelfiltration und weist ein Flächengewicht von 40 - 60 g/m² auf. Die Luftdurchlässigkeit des gesamten Aufbaus bei einem Druck von 200 Pa beträgt zwischen 800 und 1200 l/(m²s). Das Gesamtgewicht beträgt 600 - 800 g/m². Das Gewicht der Aktivkohle beträgt 500 - 650 g/m². Die Gesamtdicke liegt bei 2 - 2,5 mm. Der Vorteil des beanspruchten Filtrationsaufbaus liegt in der geringen Durchbruchneigung bzw. der hohen Adsorptionsleistung. Zur Darstellung der Durchbruchneigung wird auf die Figur 7 verwiesen. Dort sind die Durchbruchskurven bestimmter Gase nach der Methode ASAE S525-2 dargestellt, während die Kurve A übliche Aktivkohlefiltermedien zeigt stellt die Kurve B den Durchbruchverlauf der beanspruchten Filterschichten dar. Es zeigt sich, dass die Adsorptionsleistung des beschriebenen Aufbaus wesentlich höher ist und insbesondere der Beginn des Durchbruchs erheblich zeitlich gestreckt werden kann.

## Patentansprüche

1. Filterelement (10) mit einer Aktivkohleschicht (13), welche mit einer oberen Deckschicht (11) und mit einer unteren Deckschicht (12) zu einer Filterlage (14) verbunden ist, **dadurch gekennzeichnet, dass** die Filterlage (14) im Sinne eines Faltenbalges gefaltet und zumindest mit einer weiteren, ebenfalls im Sinne eines Faltenbalges gefalteten Filterlagen (15), welche eine Aktivkohleschicht (113) mit einer oberen Decklage (111) und mit einer unteren Decklage (112) aufweist, versehen ist, wobei die zumindest weitere Filterlage (15) an der einen Filterlage (14) formschlüssig über die Faltenfluchtung der Faltenbälge angeordnet ist.

2. Filterelement (10) nach Anspruch 1, **dadurch gekennzeichnet, dass** nur die oberste Deckschicht (11) in dem Verbund aus Filterlagen (14, 15, 16) mit Filtermedium, insbesondere mit Filterpapier ausgeführt ist.

3. Filterelement (10) nach Anspruch 1, **dadurch gekennzeichnet, dass** nur die oberen Deckschichten (11, 111, 211) in dem Verbund aus Filterlagen (14, 15, 16) mit Filtermedium ausgeführt sind.

4. Filterelement (10) nach Anspruch 1, **dadurch gekennzeichnet, dass** die Deckschichten (11, 12, 111, 112, 211, 212) jeder einzelnen Filterlage (14, 15, 16) mit Filtermedium ausgeführt sind.

5. Filterelement (10) nach Anspruch 1, **dadurch gekennzeichnet, dass** die Deckschichten (11, 12, 111, 112, 211, 212) jeder einzelnen Filterlage (14, 15, 16) mit Vlies ausgeführt sind.

6. Filterelement (10) nach einem der vorhergehenden Ansprüche, **dadurch gekennzeichnet, dass** die jeweilige Aktivkohleschicht (13, 113, 213) mit ihren Deckschichten (11, 12, 111, 112, 211, 212) verklebt ist.

7. Filterelement (10) nach Anspruch 6, **dadurch gekennzeichnet, dass** der Klebstoffanteil < 2%, insbesondere < 1%, des Gesamtvolumens der jeweiligen Aktivkohleschicht (13, 113, 213) beträgt.

8. Filterelement (10) nach einem der vorhergehenden Ansprüche, **dadurch gekennzeichnet, dass** die zumindest beiden Filterlagen (14, 15) wenigstens an zwei gegenüberliegenden Seiten (17), insbesondere mittels eines Seitenvlies (18) miteinander verbunden sind.

9. Filterelement nach Anspruch 1, **dadurch gekennzeichnet, dass** die Aktivkohleschicht (113) ein Gewicht im Bereich von 200 - 800 g/m² bevorzugt 500 - 600 g/m² aufweist und eine Deckschicht ein Polyester non-woven-Material mit 10 - 50 g/m² Flächengewicht aufweist.

10. Filterelement nach Anspruch 1, **dadurch gekennzeichnet, dass** die Deckschicht aus Polyester und non-woven-Polykarbonatmeltblown besteht und ein Flächengewicht von 10 - 100 g/m² bevorzugt 40 - 60 g/m² aufweist.
